# EUROPEAN PATENT SPECIFICATION

(11) **EP 2 654 096 B1**
(45) Date of publication and mention of the grant of the patent: **11.10.2017**
(21) Application number: 11848115.9
(22) Date of filing: 21.10.2011
(51) Int. Cl.: H01M 10/647, H01M 10/6554, H01M 10/613, H01M 10/0525

(54) **BATTERY**
BATTERIE
BATTERIE

(30) Priority: 16.12.2010 JP 2010280395
(43) Date of publication of application: 23.10.2013
(73) Proprietor: Murata Manufacturing Co., Ltd., Nagaokakyo-shi, Kyoto 617-8555 (JP)
(72) Inventor: ABE, Kazuhiro, Nagaokakyo-shi Kyoto 617-8555 (JP)
(74) Representative: Lloyd, Patrick Alexander Desmond
(86) International application number: PCT/JP2011/074328
(87) International publication number: WO 2012/081311

(56) References cited:
- WO-A1-2004/088754
- JP-A- 2002 124 224
- JP-A- 2008 140 601
- JP-A- 2009 272 048
- US-A1- 2010 104 937

## Description

### TECHNICAL FIELD

This invention relates to a battery, and more particularly, relates to a battery obtained by housing, in a casing, a stacked body of more than one positive electrode member and negative electrode member stacked with separators interposed therebetween, such as, for example, a lithium ion secondary battery.

### BACKGROUND ART

In recent years, secondary batteries typified by lithium ion secondary batteries have been widely used as power sources for mobile electronic devices such as cellular phones and mobile personal computers.

In a secondary battery (hereinafter, also simply referred to as a "battery") that has a laminated body of more than one positive electrode member and negative electrode member stacked with separators interposed therebetween and housed in a casing, internal short-circuit may be caused by overcharge, excessive external pressure, and the like in some cases. Further, when heat locally generated in this short-circuited point is stored (accumulated), there is a possibility that the battery will be entirely overheated to cause rapid thermal decomposition and the like of one of a positive electrode active material and an electrolyte.

Therefore, by way of solving this problem, a film outer type lithium battery has been proposed where an electrode unit including a positive electrode and a negative electrode is housed in a flattened outer casing (film outer casing), and a heat release plate is provided in contact with the outer surface (flattened surface) of the outer casing (see Patent Document 1).

Further, Patent Document 1 discloses the heat release plate provided by joining to the outer casing with the use of an adhesive agent (a hot-melt adhesive agent, a moisture curing adhesive agent, a pressure-sensitive adhesive agent) and the like (paragraph 0018), and also discloses, in an example (paragraph 0033) thereof, a configuration in which a central section of the heat release plate facing a lithium battery element (outer casing) is joined to the surface of the outer casing with the use of an adhesive agent (an EVA hot-melt adhesive agent used in this case) (see FIG. 2 of Patent Document 1).

However, because the configuration in Patent Document 1 has the adhesive layer interposed between the outer casing and the heat release plate, heat generated by the battery element will be transferred through the adhesive layer to the heat transfer plate and released, and with the low heat-transfer efficiency, heat will not be always able to be released sufficiently in some cases. More specifically, the adhesive agent typically contains a resin as a primary constituent (for example, the EVA hot-melt adhesive agent used in paragraph 0033 of Patent Document 1), and thus transfers less heat than metals, thereby making sufficient heat release more likely to be difficult.

It is to be noted that while the addition of a metal powder to the adhesive agent is also conceivable in order to improve the thermal conductivity (heat-transfer efficiency), the use of the adhesive agent combined with a metal powder unfavorably has the problems of not only causing an increase in cost, but also decreasing the adhesion strength of the adhesive agent.

### PRIOR ART DOCUMENTS

### Patent Documents

Patent Document 1: Japanese Patent Application Laid-Open No. 2007-18746

US 2010/0104937 discloses an energy storage cell having a flexible envelope and attached flat to a heat-conducting plate.

### DISCLOSURE OF THE INVENTION

### Problem to be solved by the invention

The present invention is intended to solve the problem mentioned above, and able to promptly release heat from a casing (outer casing) including a power generating element housed therein. As a result, an object of the present invention is to provide a highly-reliable battery that is able to efficiently prevent from causing rapid thermal decomposition of one of a positive electrode active material and an electrolyte due to overheating.

### Means for solving the problem

In order to solve the problem mentioned above, a battery according to the present invention has a structure:
where a positive electrode member including a positive electrode active material and a current collector and a negative electrode member including a negative electrode active material and a current collector are stacked to be opposed to each other with a separator member interposed therebetween, and housed along with an electrolyte in a casing, and a heat transfer plate is provided to be joined to the outer surface of the casing, and
the battery is characterized in that:
   the heat transfer plate includes a region in direct contact with the outer surface of the casing and a region provided with a joining material for joining the heat transfer plate to the outer surface of the casing.

In the battery according to the present invention, preferably, the region of the heat transfer plate provided with the joining material serves as a step section at a level lower than the region of the heat transfer plate in contact with the casing, and the joining material provided on the step section joins the heat transfer plate to the outer surface of the casing.

In addition, preferably, the region of the heat transfer plate provided with the joining material has a through hole, and the joining material filling the through hole joins the heat transfer plate to the outer surface of the casing.

### Advantageous effect of the invention

In the battery according to the present invention, the heat transfer plate for promoting dissipation of heat from the casing to the outside is separated into the region in direct contact with the outer surface of the casing and the region provided with the joining material for joining the heat transfer plate to the outer surface of the casing, thus making it possible to reliably join the heat transfer plate to the outer surface of the casing with the joining material provided in the region to be provided with the joining material described above, and also making it possible to efficiently dissipate heat from the casing to the outside in the region of the heat transfer plate in direct contact with the outer surface of the casing.

As a result, it becomes possible to provide a highly reliable battery which is able to promptly release heat from the casing (outer casing) including the power generating element housed therein, and able to effectively suppress or prevent thermal decomposition of one of the positive electrode active material and the electrolyte, which is caused by the battery entirely overheated.

Furthermore, when the region of the heat transfer plate provided with the joining material serve as a step section at a level lower then the region of the heat transfer plate in contact with the casing, it becomes possible to reliably join the heat transfer plate to the outer surface of the casing with the joining material provided on the step section while ensuring the region in direct contact with the outer surface of the casing, and the present invention can be made more effective.

Furthermore, when the region of the heat transfer plate provided with the joining material has a through hole such that the joining material filling the through hole joins the heat transfer plate to the outer surface of the casing, it becomes possible to join the heat transfer plate to the outer surface of the casing with the joining material filling the through hole while ensuring the region in direct contact with the outer surface of the casing, and the present invention can be made more effective.

### BRIEF EXPLANATION OF DRAWINGS

FIG. 1 is an exploded perspective view schematically illustrating the configuration of a battery according to an example (Example 1) of the present invention.
FIG. 2 is a front cross-sectional view schematically illustrating the configuration of the battery according to the example (Example 1) of the present invention.
FIG. 3 is a plan view of the battery (battery main body) with no heat transfer plate attached thereto, according to the example (Example 1) of the present invention.
FIG. 4 is a cross-sectional view of FIG. 3 along the line A-A.
FIG. 5 is a cross-sectional view of FIG. 3 along the line B-B.
FIG. 6 is an exploded perspective view schematically illustrating the configuration of a battery according to other example (Example 2) of the present invention.
FIG. 7 is a front cross-sectional view schematically illustrating the configuration of the battery according to the other example (Example 2) of the present invention.
FIG. 8 is a front cross-sectional view schematically illustrating a modification example of the battery according to the example (Example 2) of the present invention.

### BEST MODE FOR CARRYING OUT THE INVENTION

Features of the present invention will be described in more detail with reference of examples of the present invention below.

### Example 1

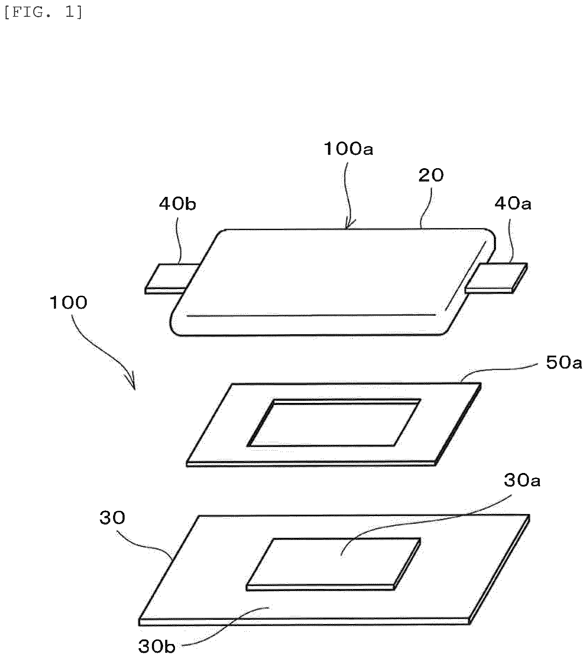

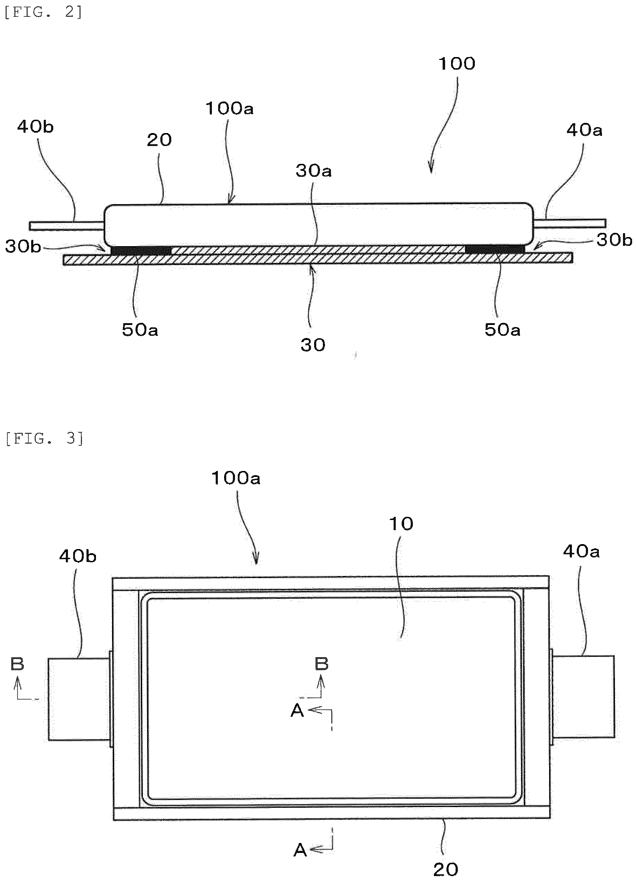

FIG. 1 is an exploded perspective view schematically illustrating the configuration of a battery (lithium ion secondary battery) according to an example (Example 1) of the present invention, and FIG. 2 is a front cross-sectional view thereof.

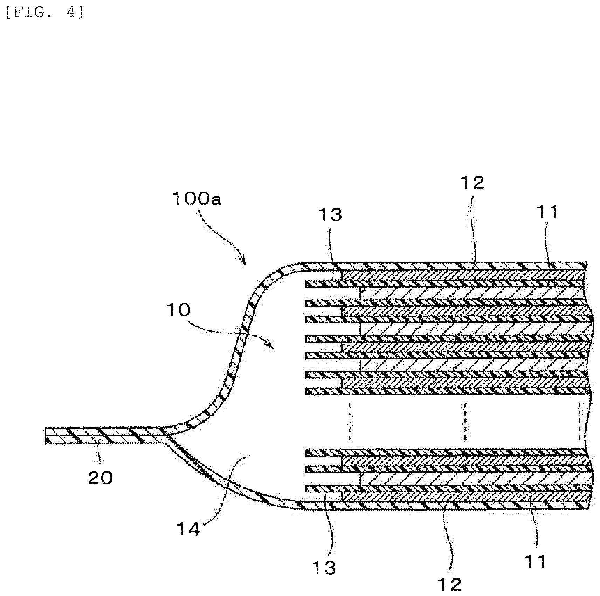

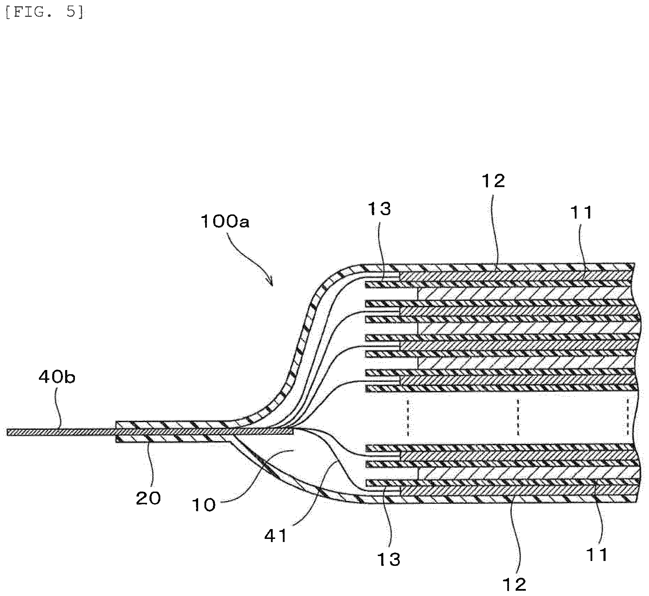

As shown in FIGS. 1 and 2, the battery 100 according to an example of the present invention includes: a power generating element 10 (see FIGS. 3 to 5); a casing (outer casing) 20 for housing and sealing the power generating element 10; and a positive electrode terminal 40a and a negative electrode terminal 40b connected via a plurality of current collector members 41 (see FIG. 5) to the power generating element 10 and extracted from the outer peripheral edge of the casing (outer casing) 20.

Further, the power generating element 10 includes, as shown in FIGS. 3 to 5, a plurality of positive electrode members 11 each including a positive electrode active material and a current collector, a plurality of negative electrode members 12 each including a negative electrode active material and a current collector, separator members 13, and a non-aqueous electrolyte solution 14 as an electrolyte, and has the plurality of positive electrode members 11 and the plurality of negative electrode members 12 stacked alternately with the separator members 13 interposed therebetween. It is to be noted that while the power generating element 10 is described herein with reference to the stacked structure as an example, the power generating element may have a wound structure obtained by winding a positive electrode member and a negative electrode member stacked with a separator interposed therebetween.

In Example 1 herein, as the positive electrode members (positive electrode plates) 11, for example, plate-like positive electrode members are used which are formed by forming a positive electrode active material layer on the surface of a current collector in such a way that a positive electrode mixture containing LiCoO₂ as a positive electrode active material, polyvinylidene fluoride (PVDF) as a binder, and acetylene black as a conducting aid is applied onto the surface of the current collector composed of aluminum foil, and dried. It is to be noted that the aluminum foil as the current collector has an end provided with a section in which the surface of the aluminum foil is exposed without the positive electrode mixture applied thereto.

Furthermore, as the negative electrode members (negative electrode plates) 12, for example, plate-like negative electrode members are used which are formed by forming a negative electrode active material layer on the surface of a current collector in such a way that a negative electrode mixture containing a graphite material as a negative electrode active material and polyvinylidene fluoride (PVDF) as a binder is applied onto the surface of the current collector composed of copper foil, and dried. It is to be noted that the copper foil as the current collector has an end provided with a section in which the surface of the copper foil is exposed without the negative electrode mixture applied thereto.

Furthermore, as the separator members 13, sheet-like separator members are used which are composed of microporous polyethylene films.

Moreover, as the casing 20, a casing is used which is configured with the use of an aluminum laminate film obtained by integrally staking an outer protective layer composed of a resin, an intermediate gas barrier layer composed of aluminum, and an inner adhesive layer composed of a resin. It is to be noted that even a metal case, etc. can be likewise used as the casing 20 which is not limited to the aluminum laminate film.

In addition, a non-aqueous electrolyte solution prepared by dissolving a supporting salt in a non-aqueous solvent is used for the non-aqueous electrolyte solution 14 as an electrolyte. In Example 1 herein, as the non-aqueous electrolyte solution, LiPF₆ is dissolved, for a concentration of 1.0 mol/L, in a non-aqueous solvent of propylene carbonate, ethylene carbonate, and diethyl carbonate mixed with proportions of 5 : 25 : 70 in terms of volume, and used. It is to be noted that materials for use in conventional batteries can be used without limitation, for the non-aqueous solvent and the supporting salt which are not limited to those described herein. In addition, the electrolyte may be one of a gel-like and a solid electrolyte.

Moreover, as shown in FIG. 5, the plurality of negative electrode members 12 is connected via the plurality of current collector members 41 to the negative electrode terminal 40b. It is to be noted that, although not shown in FIG. 5, the plurality of positive electrode members 11 is also connected via a plurality of current collector members to the positive electrode terminal 40a (FIG. 3).

Further, in the case of the battery 100 according to this example, a heat transfer plate 30 for dissipating heat generated in the casing 20 (that is, the power generating element 10) to the outside is joined to the outer surface of the casing 20, that is, the lower surface of the casing 20 in Example 1 herein.

As the heat transfer plate 30, a heat transfer plate is used which is provided with: a region (central region) 30a making up a central portion, in direct contact with the outer surface of the casing 20; and a region making up a peripheral portion, which is provided with, for example, a double-sided tape 50a as a joining material for joining the heat transfer plate 30 to the outer surface of the casing 20, that is, a region (peripheral region) 30b for interposing a joining material between the heat transfer plate 30 and the casing 20.

Specifically, the peripheral region 30b of the heat transfer plate 30, that is, the region 30b provided with the joining material (double-sided tape 50a in Example 1 herein) is supposed to serve as a step section at a level lower than the region (central region) 30a of the heat transfer plate 30 in contact with the casing 20, and configured to have, after joining, the surface of the joining material (double-sided tape 50a) provided on the peripheral region (step section) 30b at the same level as the surface of the region (central region) 30a joined to the casing 20 of the heat transfer plate 30. It is to be noted that methods for making the central region 30a above the level of the peripheral region 30b include: a method of making the portion for the central region 30a of the heat transfer plate 30 larger in sheet thickness than the peripheral region 30b thereof; and a method of processing a flat plate by pressing and the like so that a portion to serve as the central region 30a has a convex shape.

It is to be noted that an aluminum plate is used as the heat transfer plate 30 in this example.

While materials used for the heat transfer plate 30 include, as preferred materials, aluminum, copper and the like that are high in thermal conductivity and also economically advantageous, the material constituting the heat transfer plate 30 is not to be considered limited to these materials, and it is also possible to use other materials.

In addition, while the heat transfer plate 30 may be a dedicated member for heat transfer, it is also possible to use a portion of a case for housing more than one battery 100 as the heat transfer plate 30.

Furthermore, the double-sided tape 50a is used as the joining material in this example.

It is to be noted that the type of the double-sided tape 50a is not particularly restricted, and may be any type of tape as long as the tape has adhesive power capable of firmly fixing the heat transfer plate 30 to the outer surface of the casing 20.

The battery 100 according to Example 1 herein is formed by attaching the double-sided tape 50a to the peripheral region (step section) 30b of the heat transfer plate 30, and stacking and attaching the battery main body 100a thereon.

In the battery 100 configured as described above, due to the fact that the thickness of the joining material (double-sided tape 50a) after the joining is equal to the difference between the central region 30a of the heat transfer plate 30 and the peripheral region 30b thereof, the central region 30a of the heat transfer plate 30 has direct contact with the principal surface of the casing 20, and the peripheral portion 30b is reliably joined to the lower surface of the casing 20 with the joining material (double-sided tape 50a) interposed therebetween. It is to be noted that as long as the contact can be ensured between the central region 30a of the heat transfer plate 30 and the principal surface of the casing 20, there is no need for the thickness of the joining material after the joining to be equal to the step.

Therefore, it becomes possible to efficiently dissipate heat generated in the casing 20 to the outside through the heat transfer plate 30 with the central region 30a in direct contact with the outer surface of the casing 20 (a central region of the lower surface of the casing 20).

As a result, it becomes possible to provide the highly reliable battery 100 which is able to promptly release heat from the casing 20 including the power generating element 10 housed therein, and able to reliably suppress or prevent rapid thermal decomposition and the like of one of the positive electrode active material and the electrolyte, which is caused by the battery entirely overheated.

Further, the battery 100 including the configuration as described above is prepared by, for example, the following procedure.
(1) First, a stacked body that has the plurality of positive electrode members 11 and the plurality of negative electrode members 12 stacked alternately with the separator members 13 interposed therebetween is housed in the outer member (casing 20) composed of an aluminum laminate film.
(2) Then, while the outer periphery of the outer member is partially kept open as an electrolyte solution inlet for injecting the non-aqueous electrolyte solution, the other outer periphery of the outer member (casing 20) is subjected to thermal welding.
(3) Then, after a nozzle is inserted from the electrolyte solution inlet to inject the non-aqueous electrolyte solution 14 into the outer member, the part of the outer periphery, used as the electrolyte solution inlet, is subjected to temporary sealing, the temporary sealing is again opened after initial charging is carried out under predetermined conditions, and thermal welding is carried out under reduced pressure to carry out main sealing. Thus, the battery main body 100a (the battery before providing the heat transfer plate) is obtained as shown in FIGS. 3 to 5.
(4) Then, for the battery main body 100a, the double-sided tape 50a as a joining material is attached to the step section (peripheral region 30b) of the heat transfer plate 30 configured as described above, and the casing 20 is stacking and attached thereon.

Thus, the battery 100 including the heat transfer plate 30 is obtained, which is structured as shown in FIGS. 1 and 2.

### Example 2

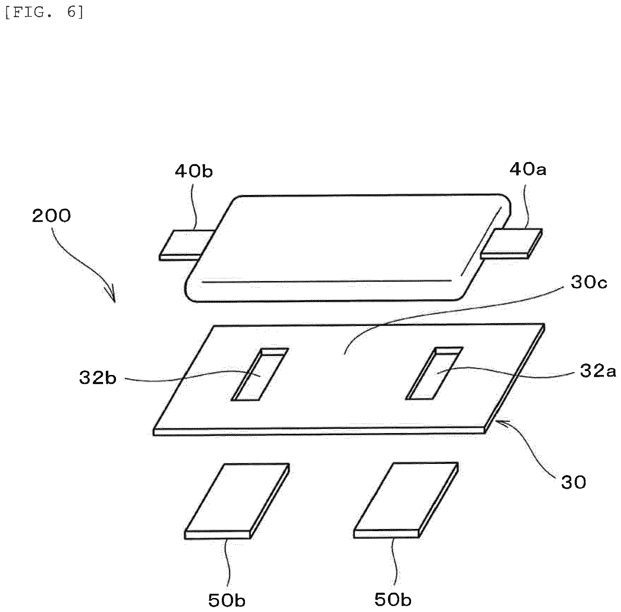

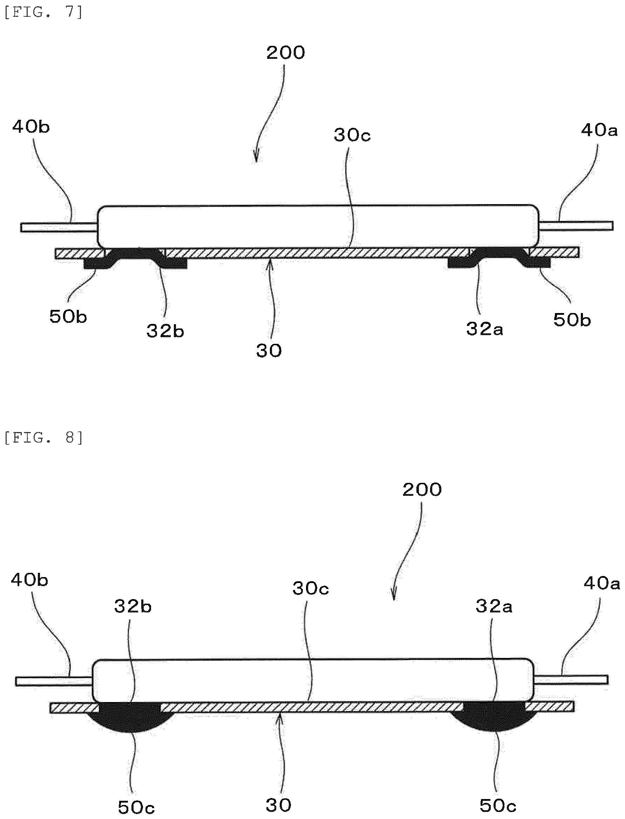

FIGS. 6 and 7 are diagrams illustrating a battery according to other example (Example 2) of the present invention, where FIG. 6 is an exploded perspective view, whereas FIG. 7 is a front cross-sectional view. In addition, FIG. 8 is a front cross-sectional view illustrating a modification example of the battery shown in FIGS. 6 and 7.

As shown in FIGS. 6 and 7, the battery 200 according to Example 2 herein has, as in the case of the battery 100 according to Example 1 (see FIGS. 1 and 2), a structure in which a heat transfer plate 30 for dissipating heat generated in a casing 20 (that is, a power generating element) to the outside is joined to the outer surface of the casing 20, that is, the lower surface of the casing 20.

Further, in the battery 200 according to Example 2 herein, as the heat transfer plate 30, a heat transfer plate is used which has the form of a flat plate, has the planar shape of a substantially rectangle, and has through holes 32a, 32b provided at both ends in a longitudinal direction, and the heat transfer plate 30 is, as shown in FIGS. 6 and 7, attached to the lower surface of the casing 20 by attaching adhesive tapes 50b to regions including the through holes 32a, 32b from the lower surface side of the heat transfer plate 30.

More specifically, in the battery 200 according to Example 2 herein, the adhesive tapes 50b attached to the regions including the through holes 32a, 32b from the lower surface side of the heat transfer plate 30 partially reach the lower surface of the casing 20 through the through holes 32a, 32b, the adhesive power of the adhesive tapes 50b joins the heat transfer plate 30 to the casing 20, and in a region of the heat transfer plate 30 opposed to the lower surface of the casing 20, a region 30c without the through holes 32a, 32b formed has direct contact with the lower surface of the casing 20.

It is to be noted that the battery 200 according to Example 2 herein has the same configuration as the battery 100 according to Example 1 described above, except that the heat transfer plate in the form of a flat plate, which has the through holes 32a, 32b provided at both ends in a longitudinal direction, is used as the heat transfer plate 30 as described above.

In the case of the battery 200 according to Example 2 herein, the adhesive tapes 50b reliably fix the heat transfer plate 30 firmly to the casing 20 while the region 30c of the heat transfer plate 30 without the through holes 32a, 32b formed has direct contact with the outer surface of the casing 20, thereby making it possible to efficiently dissipate heat generated in the casing 20 (power generating element 10) to the outside through the heat transfer plate 30.

As a result, it becomes possible to provide the highly reliable battery 200 which is able to promptly release heat from the casing 20 including the power generating element 10 housed therein, and able to reliably suppress or prevent rapid thermal decomposition and the like of one of the positive electrode active material and the electrolyte, which is caused by the battery entirely overheated.

It is to be noted that while FIGS. 6 and 7 show the battery 200 in which the adhesive tapes 50b are used to join the heat transfer plate 30 to the lower surface of the casing 20, it is also possible, as shown in FIG. 8, by potting of an adhesive agent (an EVA hot-melt adhesive agent in the example of FIG. 8) 50c as other type of joining material in the through holes 32a, 32b of the heat transfer plate 30, to join the heat transfer plate 30 to the casing 20 with the adhesive agent 50c.

It is to be noted that, as described above, the type of the adhesive agent is not to be considered limited to those described above in the case of providing a configuration such that the heat transfer plate is joined to the casing with the use of the adhesive agent, and other type of adhesive agent may be also used. Furthermore, in that case, similar advantageous effects can be also achieved.

It is to be noted that the present invention is not to be considered limited to the examples described above, and various applications and modifications can be made within the scope of the invention, regarding the types of the active materials and current collectors constituting the positive electrode members and negative electrode members, the constituent material of the separator members, the constituent material and shape of the casing, the material constituting the heat transfer plate and the method for attaching the plate, the relationship in the heat transfer plate between the region in direct contact with the outer surface of the casing and the region provided with the joining material for joining the heat transfer plate to the outer surface of the casing, etc. The scope of the invention is defined by the independent claim, to which reference should be made.

### DESCRIPTION OF REFERENCE SYMBOLS

10 power generating element
11 positive electrode member
12 negative electrode member
13 separator member
14 non-aqueous electrolyte solution
20 casing (outer casing)
30 heat transfer plate
30a central region of heat transfer plate
30b peripheral region (step section) of heat transfer plate
30c region of heat transfer plate with no through hole formed therein
32a, 32b through hole
40a positive electrode terminal
40b negative electrode terminal
41 current collector member
50a joining material (double-sided tape)
50b joining material (adhesive tape)
50c joining material (adhesive agent)
100, 200 battery
100a battery main body

## Claims

1. A battery having a structure wherein a positive electrode member comprising a positive electrode active material and a current collector and a negative electrode member comprising a negative electrode active material and a current collector are stacked to be opposed to each other with a separator member interposed therebetween, and housed along with an electrolyte in a casing, and a heat transfer plate is provided to be joined to an outer surface of the casing,
wherein the heat transfer plate comprises a region in direct contact with the outer surface of the casing and a region provided with a joining material for joining the heat transfer plate to the outer surface of the casing.

2. The battery according to claim 1, wherein the region of the heat transfer plate provided with the joining material serves as a step section at a level lower than the region of the heat transfer plate in direct contact with the casing, and the joining material provided on the step section joins the heat transfer plate to the outer surface of the casing.

3. The battery according to claim 1, wherein the region of the heat transfer plate provided with the joining material has a through hole, and the joining material filling the through hole joins the heat transfer plate to the outer surface of the casing.

## Patentansprüche

1. Batterie mit einer Anordnung, wobei ein positives Elektrodenelement, das ein Aktivmaterial für eine positive Elektrode und einen Stromabnehmer umfasst, und ein negatives Elektrodenelement, das ein Aktivmaterial für eine negative Elektrode und einen Stromabnehmer umfasst, gestapelt sind, um einander gegenüber zu liegen, wobei ein Trennelement dazwischen angeordnet ist, und gemeinsam mit einem Elektrolyten in einem Gehäuse aufgenommen ist, und eine Wärmeübertragungsplatte bereitgestellt ist, um mit einer Außenoberfläche des Gehäuses verbunden zu sein,
wobei die Wärmeübertragungsplatte einen Bereich in direktem Kontakt mit der Außenoberfläche des Gehäuses und einen Bereich, der mit einem Verbindungsmaterial zum Verbinden der Wärmeübertragungsplatte mit der Außenoberfläche des Gehäuses bereitgestellt ist, umfasst.

2. Batterie nach Anspruch 1, wobei der Bereich der Wärmeübertragungsplatte, der mit dem Verbindungsmaterial bereitgestellt ist, als ein Stufenabschnitt auf einer Ebene unter dem Bereich der Wärmeübertragungsplatte in direktem Kontakt mit dem Gehäuse dient, und das auf dem Stufenabschnitt bereitgestellte Verbindungsmaterial die Wärmeübertragungsplatte mit der Außenoberfläche des Gehäuses verbindet.

3. Batterie nach Anspruch 1, wobei der Bereich der Wärmeübertragungsplatte, der mit dem Verbindungsmaterial bereitgestellt ist, ein Durchgangsloch aufweist, und wobei das Verbindungsmaterial, das das Durchgangsloch füllt, die Wärmeübertragungsplatte mit der Außenoberfläche des Gehäuses verbindet.

## Revendications

1. Batterie ayant une structure dans laquelle un organe d'électrode positive comprenant un matériau actif d'électrode positive et un collecteur de courant et un organe d'électrode négative comprenant un matériau actif d'électrode négative et un collecteur de courant sont empilés pour être opposés l'un à l'autre avec un organe séparateur intercalé entre eux, et logés avec un électrolyte dans un boîtier, et une plaque de transfert de chaleur est prévue pour être assemblée à une surface extérieure du boîtier,
dans laquelle la plaque de transfert de chaleur comprend une région en contact direct avec la surface extérieure du boîtier et une région pourvue d'un matériau d'assemblage pour assembler la plaque de transfert de chaleur à la surface extérieure du boîtier.

2. Batterie selon la revendication 1, dans laquelle la région de la plaque de transfert de chaleur pourvue du matériau d'assemblage sert de section de décrochement à un niveau inférieur à la région de la plaque de transfert de chaleur en contact direct avec le boîtier, et le matériau d'assemblage prévu sur la section de décrochement assemble la plaque de transfert de chaleur à la surface extérieure du boîtier.

3. Batterie selon la revendication 1, dans laquelle la région de la plaque de transfert de chaleur pourvue du matériau d'assemblage a un trou traversant, et le matériau d'assemblage remplissant le trou traversant assemble la plaque de transfert de chaleur à la surface extérieure du boîtier.
